# EUROPEAN PATENT SPECIFICATION

(11) **EP 3 708 915 B1**
(45) Date of publication and mention of the grant of the patent: **21.05.2025**
(21) Application number: 20162298.2
(22) Date of filing: 11.03.2020
(51) Int. Cl.: F24D 10/00

(54) **DISTRICT-HEATING SYSTEM AND METHOD FOR INCREASING CONSUMER POWER**
FERNWAERMESYSTEM UND METHODE ZUR STEIGERUNG DER LEISTUNGSABGABE AN DEN VERBRAUCHER
SYSTEME DE CHAUFFAGE URBAIN ET METHODE POUR AUGMENTER LA PUISSANCE POUR LE CONSOMMATEUR

(30) Priority: 11.03.2019 FI 20195176
(43) Date of publication of application: 16.09.2020
(73) Proprietor: HögforsGST Oy, 79100 Leppävirta (FI)
(72) Inventor: HARTMAN, Antti, 15560 NASTOLA (FI)
(74) Representative: Kespat Oy

(56) References cited:
- EP-A1- 3 067 631
- EP-A2- 2 182 296
- WO-A1-2010/145040
- CN-B- 105 698 241
- RU-C1- 2 364 794

## Description

The object of the invention is a district-heating system, which includes:
- at least one back-pressure power plant equipped with a turbine and a condenser,
- a large number of heat consumers with heat distribution exchangers and with dedicated supply and dedicated return lines,
- a district-heating distribution piping system with a pump and comprising supply and return lines,
wherein water is circulated in the boiler/condenser of the power plant by means of the distribution piping system in order to heat the water and the heated water is guided by the distribution piping system via the heat distribution exchanger of each heat consumer in order to deliver heat to the heat consumer, and the water is returned from the heat distribution exchanger along the dedicated return line to the return line of the distribution piping system, which circulates the water back to the boiler/condenser of the power plant. The invention also relates to a method for increasing consumer power.

Document EP 2182 296 A2 presents heating networks with two distribution areas, where main distribution lines are connected to each other. The first network is a conventional district heating system having a power plant producing heat to be delivered by main supply flow to a plurality of consumers and where main return flow is collected from consumers. Each consumer object is connected to main supply line and return line by an object supply line and an object return line, which circulates water through the heat exchanger heating the object of each consumer. There is a heat pump transferring heat energy from the main return flow of the first heating system to the main supply line of the second network.

Combined Heat and Power (CHP) is a form of production in which heat and electricity are produced simultaneously in the same process. In CHP, power can be produced, for example, with a steam or gas turbine and the obtainable heat is utilized either as district heat or in industrial processes. The efficiency ratio of CHP is higher than that of a separate production, as the energy content of the fuels used in production can be utilized more efficiently.

The condensation water produced by the condensation power plant is so cold that it is thoroughly unsuitable for the production of heat. For a CHP production, the process of the power plant must thus be modified somewhat. Technical solutions are a back-pressure power plant and a power plant substation.

In Finland, combined heat and power production is the most significant form of power production; in 2009, 36 percent of electricity production was produced by CHP. Combined heat and power production is economically sound in cold winter climates such as in Northern and Eastern Europe.

With combined heat and power production, the quantity of electricity produced by the back-pressure power plant depends on the temperature of the water returning from the district-heating grid. If the district-heating water does not cool in the heat distribution exchangers of the heat consumers to a low enough temperature, the temperature of the returning district-heating water has to be lowered by condensing the heat, for example, into a water system or by accepting a reduction in power output.

More precisely, the amount of power to be produced with CHP limits the temperature of the returning district-heating water. The expansion of the steam passing through the turbine occurs in the condenser, creating a pressure determined by temperature, using district-heating water which is simultaneously heated. The higher the temperature of the returning district-heating water arriving at the condenser is, the higher the pressure arising in the condenser becomes, so that the same amount of energy can be transmitted to the same amount of district-heating water. The pressure of the condenser in turn acts as a limiting factor on how much electricity can be produced with the turbine.

The aim of the invention is to realize a district-heating system in which electricity production can be increased and which is more cost-efficient than the district-heating systems of the prior art. The characteristic features of this invention are indicated in the attached patent claim 1.

In practice, a plurality of heat consumers have a heat pump adapted to cool the temperature of the water of the dedicated return line so that the flow amount in the distribution piping system is reduced.

In some applications, the power plant is a back-pressure power plant which includes a turbine and a condenser for heating the district-heating water, wherein flow amounts are reduced, the condenser pressure decreases and the power output production per steam kilogram increases as a result of the drop in temperature of the return water.

In some applications, the power plant is a boiler for heating the district-heating water, wherein flow amounts are reduced as a result of the drop in temperature of the return water.

The boiler most advantageously includes a flue gas scrubber in which said return water is suitable for cooling flue gases and condensing their water vapour content.

This aim can be achieved with a district-heating system which includes at least one back-pressure power plant equipped with a turbine and a condenser, a large number of heat consumers with heat distribution exchangers and with dedicated supply and dedicated return lines as well as a district-heating distribution piping system with a pump and comprising supply and return lines, which distribution piping system is adapted to circulate water in the condenser of the back-pressure power plant in order to heat the water. The steam passing through the turbine thus expands in the condenser, creating a pressure determined by the temperature, and the distribution piping system is adapted to guide the heated water via the heat distribution exchanger of each heat consumer in order to deliver heat to the heat consumer. The dedicated return line is still adapted to return water from the heat distribution exchanger to the return line of the distribution piping system, which return line is in turn adapted to circulate the water back to the condenser of the back-pressure power plant. In the district-heating system, a plurality of heat consumers have a heat pump adapted to cool the temperature of the water of the dedicated return line so that, as an overall effect, the pressure of the back-pressure power plant decreases while power output production increases.

It is characteristic for the method according to the invention that the temperature of the water of the dedicated return line is cooled by means of a heat pump and the obtained amount of heat is used at a raised temperature in a heating object selected by the heat consumer in parallel with a conventional heating. Increasing the power input means a rise in power output per unit of flow. With a same power input, the flow can be reduced so that a power output is freed up for other consumers in the region.

Most advantageously, the object of the heat delivered by the heat pump is a heating circuit of a building complex in parallel with a conventional district-heating heat exchanger. Alternatively, the service water heating circuit is also a suitable object.

In some applications of the method, the amount of flow of the distribution piping system is reduced while the power input remains the same in order to create a regional auxiliary capacity and/or in order to reduce flow losses.

Generally speaking, the energy value of the district-heating water returning from the heat consumers is kept too low for an efficient utilization. It is surprising that the district-heating system according to the invention incorporates the aspiration to cool the temperature of the district-heating water returning to the back-pressure power plant with an even smaller amount of primary energy by utilizing heat pumps. The cost of investing in and using heat pumps has decreased considerably so that the use of a heat pump for cooling the returning district-heating water is economically viable. By means of the heat pump, it is in turn possible to also use the quite high, yet insufficiently so for the purposes of exploitation, temperature level of the district-heating water for the recovery of utilizable energy. As, in addition to this heat energy recovered from the district-heating water, a quite small amount of primary energy is used, the heat pump can be used for heating a utility object selected by the heat consumer in parallel with the district heat or instead of the latter.

The reduction of the pressure in the turbine condenser in turn increases the difference in enthalpy in the turbine and thereby the potential for the production of electricity. In the district-heating system according to the invention, under no circumstances does the temperature of the returning district-heating water have to be decreased by emitting excess energy as "waste"; rather, energy is recovered during the cooling of the district-heating water and is utilized for the utility purposes of the heat consumer.

A further advantage of the district-heating system according to the invention is that, thanks to the energy recovered from the returning district-heating water, the amount of hot district-heating water required by the heat consumers is reduced. By this means, the flows in the distribution piping system are reduced by as much as 50 % so that the cost of pumping the district-heating water decreases by as much as 75 %. On the other hand, also the heat losses of the returning district-heating water decrease by as much as 80 %, as the returning district-heating water has already been adequately cooled by the heat pump. Reducing the flows also renders possible the implementation of a smaller diameter in the distribution piping systems, which reduces the cost of investing in distribution piping systems.

In the district-heating system according to the invention, the heat pump works very efficiently, as the additional energy required by the heat pump is quite small so that the energy of the returning district-heating water can be utilized for objects selected by the heat consumer. The COP values of the heat pump can be between 5 - 8. As a whole, the primary energy balance of the system is not impaired. Slightly more electricity is consumed than in systems according to the prior art; on the other hand, however, the consumption of hot district-heating water decreases. During large loads, the boiler output can be reduced in the district-heating system, as the back-pressure output is sufficient to produce the required district-heating output.

The heat pump advantageously includes a closed medium circulation, a compressor, an expansion valve, an evaporator and a condenser, and the heat pump is connected so as to utilize by means of its evaporator the heat of the district-heating water of the dedicated return line in order to decrease the temperature of the water of the return line of the distribution piping system as well as to deliver heat to a medium of the heating piping system of the heat consumer. The evaporator adapted to be connected to the dedicated return line cools the returning district-heating water in the dedicated return line, thus lowering its temperature and raising the temperature of the closed medium circulation. The temperature of the medium circulation is subsequently raised still further by means of the compressor until heat is delivered by the second condenser in connection with an object selected by the heat consumer.

Each heat consumer has heating objects to which the second condenser feeds the heat in a manner known *per se.* This way, the heat of the district-heating water returning from the heat distribution exchanger of the heat consumer can be transported to an object selected by the heat consumer, thus reducing the consumption of warm district-heating water and reducing the temperature of the district-heating water returning to the back-pressure power plant.

According to a typical embodiment, the heating object is the piping system of a heating radiator network of a building complex. Another object is a service-water heating. The connection configurations of the heat pump in this regard are well known and are not discussed here in greater detail.

The heat pump can be adapted to transport heat to a heating piping system in parallel with a heat distribution exchanger. In this case, the need for hot district-heating water required for heating the heating piping system in question can be reduced.

The district-heating system includes as a connection to the distribution piping system supply and return lines arranged between the heat distribution exchanger of the heat consumer and the distribution piping system. The large-diameter district-heating distribution pipes (supply and return) are thus guided into the vicinity of each heat consumer, from whence there is a connection to the heat distribution exchanger of the heat consumer.

The heat pump can be dimensioned so as to decrease the temperature of the water of the dedicated return line by 5 - 30 °C, 20 - 30 °C. The temperature of the water in the return line of the district-heating distribution piping system thus sinks to a level of 15 - 45 °C, advantageously 20 - 30 °C, while the heat losses of the returning district-heating water remain at a minimum when circulating back to the back-pressure power plant. Moreover, this renders possible a lower pressure level at the condenser of the back-pressure power plant when condensing the steam and, by this means, also a greater production of electricity, at least during a part of the year. When the temperature of the returning district-heating water is quite low, it is also possible to realize the return line of the distribution piping system using thin insulation.

According to one embodiment, the return line of the distribution piping system is guided to the condenser via flue gas scrubbers belonging to the power plant. This is one way to utilize the low temperature of the returning district-heating water in the return line of the district-heating distribution piping system and to be able to take in more heat. At the back-pressure power plant, the return water is distributed at a desired ratio to the flue gas scrubber and to the condenser.

The nominal output of the heat pump is 10 - 50 % and most advantageously 20 - 30 % of the nominal output of the district heating at the heat consumer. The heat pump is thus able to increase the heat yield at the consumer to a significant extent and to reduce flow amounts of the dedicated lines. This is of great economic significance during peak loads.

The heat pump is advantageously connected to a control system of the district-heating provider as a remote-controllable resource.

In an advantageous embodiment, the heat transporter of the dedicated return line is connected to an exhaust-air heat-recovery system as a heat source. Such a solution can also be realized technically in single buildings. The auxiliary heat transporter circuit, which is equipped with a pump, can be connected, e.g. in a parasite configuration, to the line leading to the evaporator in the existing exhaust-air heat-recovery system.

It is surprising that the district-heating system according to the invention incorporates the aspiration of deliberately cooling the district-heating water with a small primary output. The decrease in the cost of investing in and using heat pumps has rendered possible their efficient use in heat recovery and thereby the economical realization of the system in accordance with the invention.

The economic benefits of the invention can be set out as follows:

### 1) Benefit for the power plant

The power plant makes the investment and takes the electricity for the heat pump from the energy it produces. They sell the heat to the customer, but produce a part of it on site with the device. This benefits the customer, who no longer needs to have a heat distribution centre, while the energy company offers affordable energy.

### 2) Benefit for the customer

The energy company offers a pricing model in which the customer benefits from an exceptionally good cooling. This can be done, e.g., by means of a charge by flow.

The same system can be implemented with a small modification in connection with a cooling in summertime. The heat pump produces a heating of the service water during the summer, in particular a heating utilizing a superheat. The district heating can then be shut off entirely and the cooler of the return line used for heating the supply line by short-circuiting the return and supply line and by pumping the district-heating water in a direction opposite to the normal direction from the return line to the supply line. The amount of heat collected during cooling and the electricity used by the compressor is thus guided to the heat transporter connected to the district-heating return pipe by means of a "dumping" from the condenser side of the heat pump. The condensate arising during cooling can thus be used in heat production for other district-heating customers.

0The invention is illustrated in the following in detail with reference to the attached drawings illustrating embodiments of the invention, wherein
- Figure 1: shows a representation of a district-heating system according to the prior art in principle
- Figure 2: shows an embodiment of the district-heating system according to the invention as a process flow diagram
- Figure 3: shows the system of Figure 2 in connection with an exhaust-air heat recovery unit

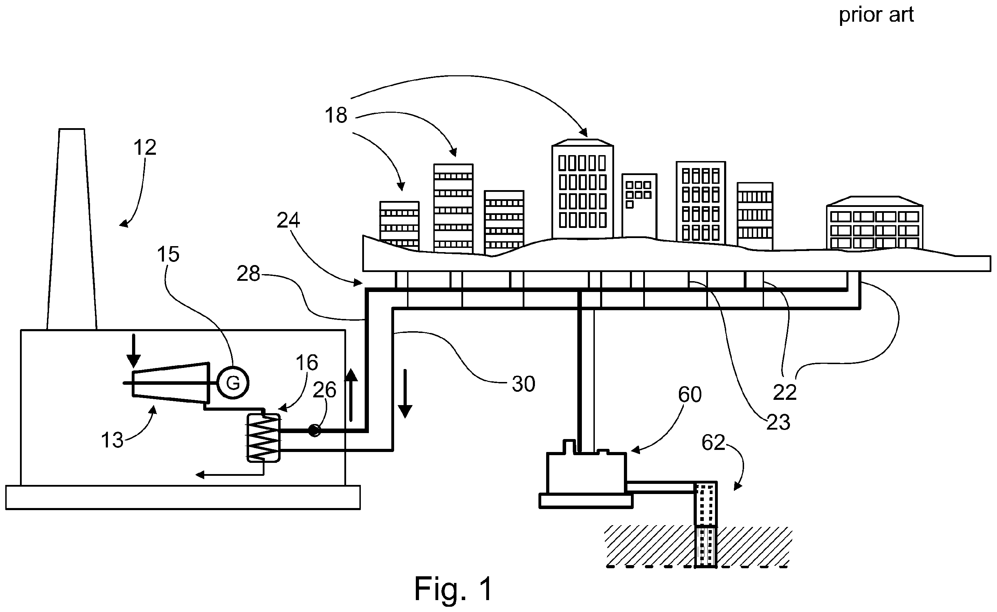

Figure 1 shows a district-heating system according to the prior art. In the district-heating system 10, heat produced by a back-pressure power plant 12 is transported to heat consumers 18 by means of a district-heating distribution piping system 24. The heat consumers 18 are advantageously building complexes, but can also be other industrial plants or other objects requiring heating. In accordance with the prior art, the back-pressure power plant 12 includes a turbine 13, which is advantageously rotated by the water vapour formed by the flue gases of the back-pressure power plant. Electricity is produced with the turbine 13 and a generator 15 while the steam or flue gas used is cooled by means of a condenser 16. The district-heating water of the district-heating distribution piping system 24 is circulated in the condenser 16, the district-heating water cooling the condenser and simultaneously being heated to a suitable temperature in accordance with its intended function. The temperature of the district-heating water exiting into the district-heating distribution piping system can vary depending on the time of year and outside temperature, for example between 70 - 120 °C, so that the pressure level of the district-heating water also changes in accordance with the temperature. The district-heating water is pumped in the distribution piping system 24 by means of a pump 26 to the heat consumers 18, where the objects selected by the heat consumers are heated with the district-heating water. The most common utility objects of district heating are the heating of building complexes or the water or service water of a piping system of a heating radiator network, to which heat is transported from the district-heating water by means of the heat distribution exchanger of each heat consumer.

In the district-heating system according to the prior art shown in Figure 1, heat is also brought to the heat consumers by means of a separate geothermal heat unit 60. The geothermal heat unit 60 draws geothermal heat from a well 62 and transports energy therefrom to the district-heating water of the district-heating distribution piping system. In most cases, the district-heating systems according to the prior art do not have such an external heat source and the heat is only produced by the back-pressure power plant.

In the district-heating system according to the invention, it is possible to utilize the district-heating system according to the prior art as shown in Figure 1 fully without any modifications to the back-pressure power plant 12 and its parts and the distribution piping system 24 of the district heating at least partially. The essential structural differences from the standpoint of the invention pertain to the use of the district heating in connection with each heat consumer.

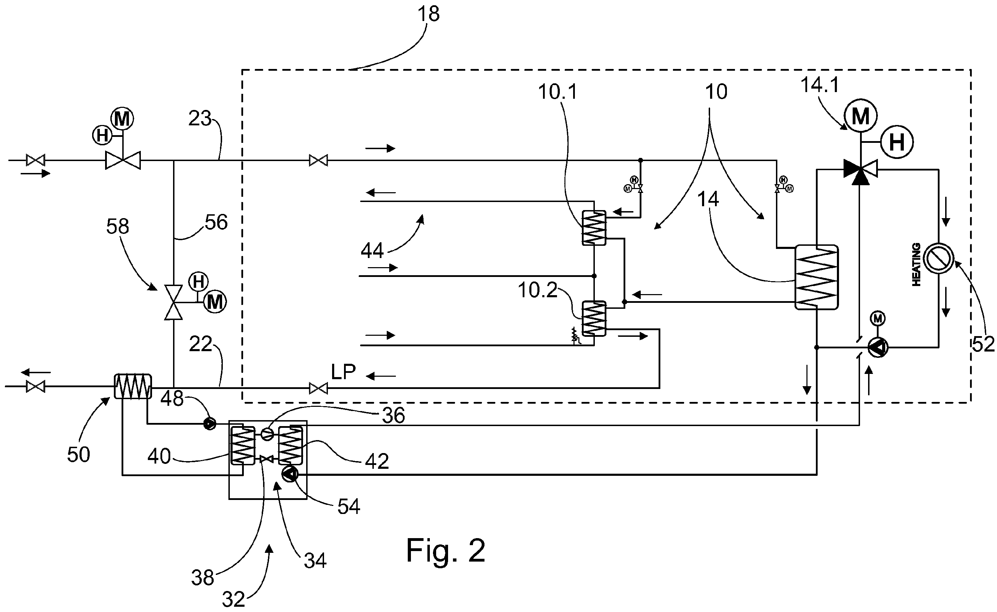

Figure 2 shows a configuration of a district-heating system according to the invention on the side of the heat consumer as a process flow diagram. Illustrated on the left-hand edge of Figure 2 are a supply line 28 of the district-heating distribution piping system 24, which supply line 28 conveys the hot district-heating water coming from the back-pressure power plant, and a return line 30, which in turn circulates the used and chilled district-heating water back to the back-pressure power plant. In general, neither the supply line 28 nor the return line 30 of the distribution piping system 24 reach right up to the heat distribution exchanger of the heat consumer, but rather each heat consumer has its own dedicated lines, i.e. a dedicated supply line 23 transporting hot district-heating water from the supply line 28 of the distribution piping system 24 to the heat distribution exchangers 10.1, 10.2 and 14 of the heat consumer and a dedicated return line 22 bringing chilled district-heating water back from the heat distribution exchangers 10.1, 10.2 and 14 to the return line 30 of the distribution piping system 24. In Figure 2, the part of the district-heating system belonging to the structures of the heat consumer is delineated by dashed lines in the process flow diagram. Using the dedicated supply line 23, hot district-heating water is brought to the heat distribution exchangers 10.1, 10.2 and 14of the heat consumer. The hot district-heating water circulates in each heat distribution exchanger 10.1, 10.2 and 14, heating each selected utility object. The utility object is advantageously a radiator heating circuit 52 or a service water piping system 44 of the building complex of the heat consumer 18. The chilled district-heating water is returned from the heat distribution exchangers to the return line 30 of the distribution piping system 24 along the dedicated return line 22 of the heat consumer. Up to this point, the district-heating system illustrated in Figure 2 can be entirely consistent with the prior art.

Relative to the prior art, the district-heating system according to the invention has as an additional element a heat pump 32, by means of which energy is recovered from the district-heating water running in the dedicated return line 22, thus cooling the returning district-heating water before its being returned to the return line 30 of the distribution piping system 24. The heat pump 32 can be a heat pump 32 entirely in accordance with the prior art, which includes a closed medium circulation 34, a compressor 36, an expansion valve 38, an evaporator 40 and a second condenser 42. The heat pump 32 is connected in accordance with the invention so as to utilize by means of the evaporator 40 the heat of the district-heating water in the dedicated return line 22 in order to lower the temperature of the water in the return line 30 of the distribution piping system 24. For this purpose, the evaporator 40 can be joined directly to the connection of the dedicated return line 22 or the district-heating water of the dedicated return line 22 can flow as shown in Figure 2 via the heat exchanger 50, which heats a separate transport flow, which circulates via the evaporator 40 and is transported by the pump 48. In both cases, the cold medium of the closed medium circulation flowing via the evaporator 40 absorbs heat either directly or by means of the transport flow from the district-heating water of the dedicated return line so that the temperature of the district-heating water decreases and the temperature of the medium of the closed medium circulation increases while simultaneously evaporating. The temperature of the district-heating water can decrease by 5 - 30 °C, advantageously by 20 - 30 °C, being, for example, 50 °C before the heat pump 32 and approximately 20 °C when it reaches the return line 30 of the distribution piping system 24. The heat pump can be arranged, for example, in the heat distribution room of a building complex. There can be a plurality of heat pumps on the site of a large building complex in order to realize a sufficient cooling capacity.

By means of the heat contained in the returning district-heating water, the pressure level of the evaporated medium in the closed medium circulation 34 of the heat pump 32 is further increased by means of the compressor 36 so that its temperature also rises. The medium is subsequently transported in the closed medium circulation 34 to a second condenser 42, in which the medium is cooled while giving off heat to a utility object selected by the heat consumer, for example in parallel with a room heating (heat exchanger 14), in order to feed the heating network 52 such as, for example, a radiator network. It is naturally advantageous if the delivery temperature of the heat of the heat pump is low such as in a floor heating system. The medium cooled in the condenser 42 circulates in the closed medium circulation 34 via the expansion valve 38 back to the evaporator 40 and the cycle is repeated. One utility object to which heat is delivered from the condenser 42 is depicted in connection with Figure 2. For example, a second transport flow to a connection of the condenser 42 can be arranged, said transport flow transporting heat, for example to a service water heating or the like, using a transport pump 54. There can be a separate recycling line 56 between the dedicated supply line 23 and the dedicated return line 22, which recycling line 56 can be closed and opened by means of a motorized valve 58. By this means, it is possible in special circumstances to regulate the usage of the district heat.

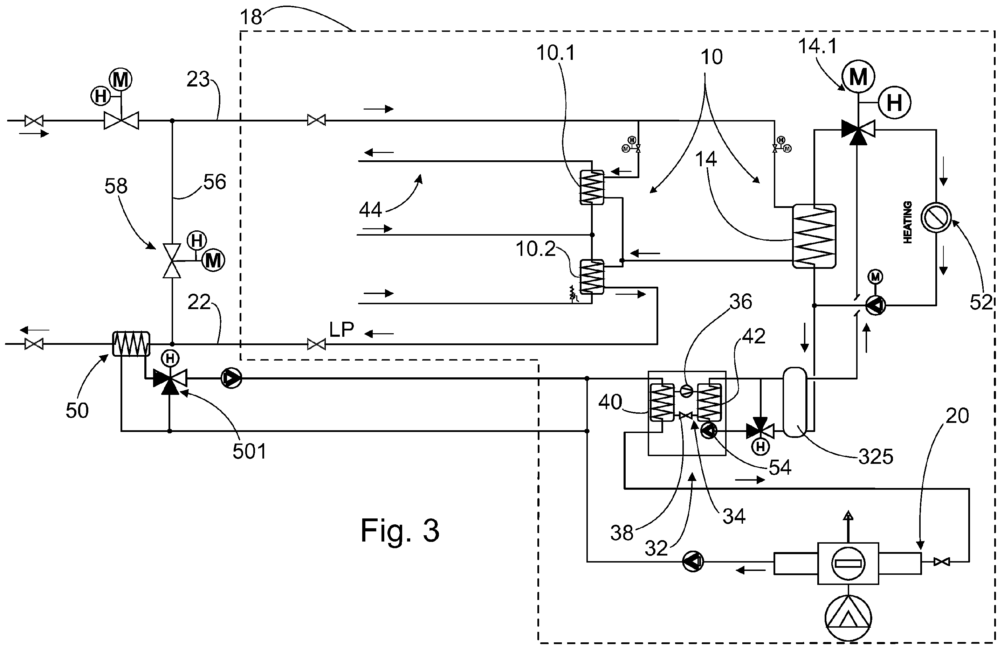

The system is particularly advantageous as shown in Figure 3, as the heat exchanger 50 of the dedicated return line 22 can be connected to the system in parallel with an already present heat pump 32 utilizing an exhaust-air heat recovery unit 20. The heat exchanger 50 equipped with its own pump in the figure is connected by a so-called parasite configuration to the line coming from the exhaust-air heat recovery unit. This is just one option and there are also other possible configurations. Finnish utility model FI 12382 discloses a heat pump using an exhaust-air heat recovery unit, which heat pump supplies heat in parallel with a conventional heating. The exhaust-air heat recovery unit 20 most commonly comprises a single-phase crossflow heat exchanger, a fan and a filter. The heat exchanger advantageously has more phases, for example three phases (generally 2 - 4 phases) so that a substantially large change in temperature is achieved on both sides (air / water).

In the example shown in Figure 3, the condenser 42 of the heat pump 32 supplies heat to the heating via a free-flow separator 325. This is also disclosed in the mentioned utility model. This way, the flow circuits can be separated from one another in such a way that both can be independently regulated although heat can still be transferred from one circuit to the other.

In order to improve the regulation options in connection with the heat transporter 50 of the dedicated return line 22, a bypass controlled by a three-way valve 501 is provided, with which it is possible to reduce the temperature of the water flowing to the evaporator 40. The evaporator 40 may have an allowed maximum temperature, thus rendering this arrangement necessary.

In order to improve the regulation options on the side of the condenser as well, a corresponding bypass controlled by a three-way valve is implemented here.

The district-heating system according to the invention can already be accommodated in currently existing district-heating systems by adding a heat pump in connection with the dedicated return lines of each heat consumer. For example, if there are 5000 heat consumers of district heat in a city and a heat pump, which cools the 50 °C district-heating return water from the 50 °C at which it leaves the heat distribution exchanger of the heat consumer to a temperature of 20 °C, is installed in accordance with the invention so as to be connected to the dedication return lines of one-tenth of said heat consumers, i.e. five hundred heat consumers, the temperature of the district-heating water returning to the back-pressure power plant thus decreases from a temperature of 50 °C to a temperature of 47 °C, which nevertheless helps to render electricity production more effective and to reduce the consumption of district-heating water. This is of considerable consequence during peak loads.

The district-heating system according to the invention works best when a large portion or even all of the heat consumers of the district-heating system have a heat pump according to the invention, thus cooling the return flow of district-heating water. The distribution piping system of the district-heating system can thus be designed optimally with regard to its diameter and insulation taking into account the smaller flow of district-heating water and the lower temperature difference of the returning district-heating water in relation to the environment in the system according to the invention. Moreover, the temperature of the hot district-heating water leaving the back-pressure power plant can thus be regulated to a lower temperature when the heat consumer's demand for heat decreases. The increased demand for electricity resulting from the heat pumps of the district-heating system is quite small, as a heat pump working with, for example, an efficiency of COP 5 merely requires 1 kW of power input to produce 5kW of heating output. This is invariably much better than the structural ratio of even the best back-pressure power plant, even if the heat of the heat pump would be sold at a lower price to the customer.

The idea of the district-heating system according to the invention can also generally be realized as a method for distributing district heat, wherein fuel is burnt in the boiler of the back-pressure power plant in order to evaporate water, electricity is produced by means of a turbine from the highpressure steam and the steam that has passed through the turbine is condensed with the condenser while heating the district-heating water. The hot district-heating water is circulated in the supply line of the distribution piping system for the district-heating water to a plurality of heat consumers and the district-heating water that has given off heat is circulated in the return line of the distribution piping system back to the power plant in order to be heated again. An object selected by each heat consumer is heated with the hot district-heating water while, in addition, external heat is collected by means of the heat pump for heating the utility object. More precisely, by means of the heat pump, heat is recovered from the district-heating water of the dedicated return line of each heat consumer while, simultaneously, the temperature of the district-heating water to be returned to the return line of the district-heating distribution piping system is decreased, the temperature of the medium of the medium circulation of the heat pump is increased by means of the compressor, and heat is transported for the heating of a utility object selected by the heat consumer.

In the version implementing a boiler, a flue gas scrubber is advantageously used, in which flue gases are cooled with the colder return water. One such flue gas scrubber is the flue gas scrubber CALIGO from Caligo Industria Oy, which is suitable for the intended use here.

## Claims

1. A district-heating system (10), which includes
• at least one power plant (12) equipped with a boiler or a turbine (14) and a condenser (16),
• a large number of heat consumers (18) with heat distribution exchangers (14, 10.1, 10.2) and with dedicated supply and dedicated return lines (23,22),
• a district-heating distribution piping system (24) with a pump (26), comprising supply and return lines (28,30),
wherein water is circulated in the boiler/condenser (16) of the power plant (12) by means of the distribution piping system (24) in order to heat the water and the heated water is guided by means of the distribution piping system (24) via the heat distribution exchanger (14, 10.1, 10.2) of each heat consumer (18) in order to deliver heat to the heat consumer (18), and the water is returned from the heat distribution exchanger (14, 10.1, 10.2) along the dedicated return line (22) to the return line (30) of the distribution piping system (24), the return line (30) circulating the water back to the boiler/condenser (16) of the power plant (12), **characterized in that** a plurality of said heat consumers (18) have an object (52) and have a heat pump (32), the heat pump (32) being adapted to cool the temperature of the water of the dedicated return line (22) so that the flow amount of the distribution piping system (24) is reduced, while the heat pump (32) is simultaneously adapted to deliver heat to said object (52) selected by said plurality of heat consumers (18).

2. The district-heating system according to claim 1, **characterized in that** the power plant is a back-pressure power plant (12), which includes a turbine (14) and a condenser (16) for heating the district-heating water so that, as a result of the decrease in temperature of the return water, flow amounts are reduced, the pressure in the condenser (16) decreases and the production of power output per steam kilogram increases.

3. The district-heating system according to claim 1, **characterized in that** the power plant is a boiler for heating the district-heating water so that, as a result of the decrease in temperature of the return water, flow amounts are reduced.

4. The district-heating system according to claim 1 or 3, **characterized in that** the boiler includes a flue gas scrubber, wherein the return water is at least partially suitable for cooling flue gases and for condensing their water vapour content.

5. The district-heating system according to any one of claims 1-4, **characterized in that** each heat consumer (18) has a heating piping system (44) to which the condenser (42) of the heat pump (32) is connected in order to deliver heat.

6. The district-heating system according to claim 5, **characterized in that** said heat pump (32) is adapted to transport heat in parallel with a heat distribution exchanger (20) to said heating piping system (44).

7. The district-heating system according to any one of claims 1 - 6, **characterized in that** the dedicated return line (22) is connected between the heat distribution exchanger (20) of the heat consumer (18) and the return line (30) of the distribution piping system (24).

8. The district-heating system according to any one of claims 1 - 7, **characterized in that** the heat pump (32) is dimensioned so as to decrease the temperature of the water of the dedicated return line (22) by 5 - 30 °C, advantageously by 20 - 30 °C.

9. The district-heating system according to claim 5, **characterized in that** the heat pump (32) includes a closed medium circulation (34), a compressor (36), an expansion valve (38), an evaporator (40) and a second condenser (42) and the heat pump (32) is connected so as to utilize by means of its evaporator (40) the heat of the district-heating water of the dedicated return pipe (22) in order to decrease the temperature of the water of the return line (30) of the distribution piping system (24) as well as to deliver heat to the medium of the heating pipe system (44) of the heat consumer (18).

10. The district-heating system according to any one of claims 1 - 9, **characterized in that** the nominal output of the heat pump (32) is 10 - 50% and most advantageously 20 - 30 % of the nominal output of the district heating at the heat consumer.

11. The district-heating system according to any one of claims 1 - 10, **characterized in that** it comprises a district heating provider, and that the heat pump (32) is linked to a control system of the district-heating provider as a remote-controllable resource.

12. The district-heating system according to any one of claims 1 - 11, **characterized in that** the object (52) of the heat delivered by the heat pump (32) is a heating circuit of a building complex in parallel with a heat exchanger (14) heated conventionally by district heat.

13. The district-heating system according to any one of claims 1 - 12, **characterized in that** it comprises an exhaust-air heat recovery unit (20), and that a heat exchanger (50) of the dedicated return line (22) is connected in parallel with the exhaust-air heat recovery unit (20).

14. A method for increasing the power input of the heat consumer (18)
in the district-heating system (10) of claim 1,
wherein water is circulated in the boiler/condenser (16) of the power plant (12) by means of the distribution piping system (24) in order to heat water and the heated water is guided by means of the distribution piping system (24) via the heat distribution exchanger (14, 10.1, 10.2) of each heat consumer (18) in order to deliver heat to the heat consumer (18), and the water is returned from the heat distribution exchanger (14, 10.1, 10.2) along the dedicated return line (22) to the return line (30) of the distribution piping system (24), the return line (30) circulating the water back to the boiler/condenser (16) of the power plant (12), **characterized in that** the temperature of the water of the dedicated return line (22) is cooled by means of the heat pump (32) while the power input remains the same, and the obtained heat amount is used at a raised temperature in a heating object selected by the heat consumer (18) in parallel with a conventional heating.

15. The method according to claim 14, **characterized in that** the flow amount of the distribution piping system (24) is reduced in order to create an additional regional capacity and/or in order to reduce the flow losses.

## Patentansprüche

1. Fernwärmesystem (10), das Folgendes einschließt
• mindestens ein Kraftwerk (12), das mit einem Kessel oder einer Turbine (14) und einem Kondensator (16) ausgestattet ist,
• eine große Anzahl von Wärmeverbrauchern (18) mit Wärmeverteilungsaustauschern (14, 10.1, 10.2) und mit speziellen Versorgungsleitungen und speziellen Rücklaufleitungen (23, 22),
• ein Fernwärmeverteilungsrohrleitungssystem (24) mit einer Pumpe (26), umfassend Versorgungs- und Rücklaufleitungen (28, 30),
wobei das Wasser im Kessel/Kondensator (16) des Kraftwerks (12) durch das Verteilungsrohrleitungssystem (24) zirkuliert, um das Wasser zu erwärmen, und das erwärmte Wasser durch das Verteilungsrohrleitungssystem (24) über den Wärmeverteilungsaustauscher (14, 10.1, 10.2) jedes Wärmeverbrauchers (18) geführt wird, um Wärme an den Wärmeverbraucher (18) abzugeben, und das Wasser vom Wärmeverteilungsaustauscher (14, 10.1, 10. 2) entlang der speziellen Rücklaufleitung (22) zur Rücklaufleitung (30) des Verteilungsrohrleitungssystems (24) zurückgeführt wird, wobei die Rücklaufleitung (30) das Wasser zurück zum Kessel/Kondensator (16) des Kraftwerks (12) zirkuliert, **dadurch gekennzeichnet, dass** eine Vielzahl der Wärmeverbraucher (18) ein Objekt (52) und eine Wärmepumpe (32) aufweist, wobei die Wärmepumpe (32) eingerichtet ist, um die Temperatur des Wassers der speziellen Rücklaufleitung (22) zu kühlen, sodass die Ablaufmenge des Verteilungsrohrleitungssystems (24) reduziert wird, während die Wärmepumpe (32) gleichzeitig eingerichtet ist, um Wärme an das von der Vielzahl von Wärmeverbrauchern (18) ausgewählte Objekt (52) abzugeben.

2. Fernwärmesystem nach Anspruch 1, **dadurch gekennzeichnet, dass** das Kraftwerk ein Gegendruckkraftwerk (12) ist, das eine Turbine (14) und einen Kondensator (16) zum Erwärmen des Fernwärmewassers einschließt, sodass als Ergebnis der Verringerung der Temperatur des Rücklaufwassers die Ablaufmengen vermindert werden, der Druck im Kondensator (16) verringert wird und die Leistungsabgabe pro Dampfkilogramm steigt.

3. Fernwärmesystem nach Anspruch 1, **dadurch gekennzeichnet, dass** das Kraftwerk einen Kessel zum Erwärmen des Fernwärmewassers einschließt, sodass als Ergebnis der Verringerung der Temperatur des Rücklaufwassers die Ablaufmengen vermindert werden.

4. Fernwärmesystem nach Anspruch 1 oder 3, **dadurch gekennzeichnet, dass** der Kessel einen Abgaswäscher einschließt, wobei das Rücklaufwasser mindestens teilweise zum Kühlen von Abgasen und zum Kondensieren ihres Wasserdampfgehalts geeignet ist.

5. Fernwärmesystem nach einem der Ansprüche 1 bis 4, **dadurch gekennzeichnet, dass** jeder Wärmeverbraucher (18) ein Wärmerohrleitungssystem (44) aufweist, mit dem der Kondensator (42) der Wärmepumpe (32) verbunden ist, um Wärme abzugeben.

6. Fernwärmesystem nach Anspruch 5, **dadurch gekennzeichnet, dass** die Wärmepumpe (32) eingerichtet ist, um Wärme parallel zu einem Wärmeverteilungsaustauscher (20) zu dem Wärmerohrleitungssystem (44) zu transportieren.

7. Fernwärmesystem nach einem der Ansprüche 1 bis 6, **dadurch gekennzeichnet, dass** die spezielle Rücklaufleitung (22) zwischen dem Wärmeverteilungsaustauscher (20) des Wärmeverbrauchers (18) und der Rücklaufleitung (30) des Verteilungsrohrleitungssystems (24) verbunden ist.

8. Fernwärmesystem nach einem der Ansprüche 1 bis 7, **dadurch gekennzeichnet, dass** die Wärmepumpe (32) so bemessen ist, dass sie die Temperatur des Wassers der speziellen Rücklaufleitung (22) um 5 bis 30 °C, vorteilhafterweise um 20 bis 30 °C, verringert.

9. Fernwärmesystem nach Anspruch 5, **dadurch gekennzeichnet, dass** die Wärmepumpe (32) eine geschlossene Mediumszirkulation (34), einen Verdichter (36), ein Expansionsventil (38), einen Verdampfer (40) und einen zweiten Kondensator (42) einschließt und die Wärmepumpe (32) so verbunden ist, dass sie durch ihren Verdampfer (40) die Wärme des Fernwärmewassers der speziellen Rücklaufleitung (22) nutzt, um die Temperatur des Wassers der Rücklaufleitung (30) des Verteilungsrohrleitungssystems (24) zu verringern sowie Wärme an das Medium des Wärmerohrleitungssystems (44) des Wärmeverbrauchers (18) abzugeben.

10. Fernwärmesystem nach einem der Ansprüche 1 bis 9, **dadurch gekennzeichnet, dass** die Nennleistung der Wärmepumpe (32) 10 bis 50 % und vorteilhafterweise 20 bis 30 % der Nennleistung der Fernwärme am Wärmeverbraucher beträgt.

11. Fernwärmesystem nach einem der Ansprüche 1 bis 10, **dadurch gekennzeichnet, dass** es einen Fernwärmeversorger umfasst, und dass die Wärmepumpe (32) als fernsteuerbare Ressource an ein Steuerungssystem des Fernwärmeversorgers angeschlossen ist.

12. Fernwärmesystem nach einem der Ansprüche 1 bis 11, **dadurch gekennzeichnet, dass** das Objekt (52) der von der Wärmepumpe (32) abgegebenen Wärme eine Wärmeschaltung eines Gebäudekomplexes parallel zu einem Wärmeaustauscher (14) ist, der herkömmlich mit Fernwärme erwärmt wird.

13. Fernwärmesystem nach einem der Ansprüche 1 bis 12, **dadurch gekennzeichnet, dass** es eine Abluftwärmerückgewinnungseinheit (20) umfasst, und dass ein Wärmeaustauscher (50) der speziellen Rücklaufleitung (22) parallel mit der Abluftwärmerückgewinnungseinheit (20) verbunden ist.

14. Verfahren zur Steigerung der Leistungseingabe an den Wärmeverbraucher (18) in dem Fernwärmesystem (10) nach Anspruch 1,
wobei das Wasser im Kessel/Kondensator (16) des Kraftwerks (12) durch das Verteilungsrohrleitungssystem (24) zirkuliert wird, um das Wasser zu erwärmen, und das erwärmte Wasser durch das Verteilungsrohrleitungssystem (24) über den Wärmeverteilungsaustauscher (14, 10.1, 10.2) jedes Wärmeverbrauchers (18) geführt wird, um Wärme an den Wärmeverbraucher (18) abzugeben, und das Wasser vom Wärmeverteilungsaustauscher (14, 10.1, 10. 2) entlang der speziellen Rücklaufleitung (22) zur Rücklaufleitung (30) des Verteilungsrohrleitungssystems (24) zurückgeführt wird, wobei die Rücklaufleitung (30) das Wasser zurück zum Kessel/Kondensator (16) des Kraftwerks (12) zirkuliert, **dadurch gekennzeichnet, dass** die Temperatur des Wassers der speziellen Rücklaufleitung (22) durch die Wärmepumpe (32) gekühlt wird, während die Leistungseingabe gleich bleibt, und die gewonnene Wärmemenge bei einer erhöhten Temperatur in einem vom Wärmeverbraucher (18) ausgewählten Wärmeobjekt parallel zu einer herkömmlichen Erwärmung verwendet wird.

15. Verfahren nach Anspruch 14, **dadurch gekennzeichnet, dass** die Ablaufmenge des Verteilungsrohrleitungssystems (24) reduziert wird, um eine zusätzliche regionale Kapazität zu erstellen und/oder um die Ablaufverluste zu reduzieren.

## Revendications

1. Système de chauffage urbain (10), comprenant
• au moins une centrale électrique (12) équipée d'une chaudière ou d'une turbine (14) et d'un condenseur (16),
• un grand nombre de consommateurs de chaleur (18) dotés d'échangeurs de distribution de chaleur (14, 10.1, 10.2) et de conduites dédiées d'approvisionnement et de retour (23,22),
• un système de canalisations pour la distribution de chauffage urbain (24) avec une pompe (26), comprenant des conduites d'approvisionnement et de retour (28,30),
dans lequel l'eau circule dans la chaudière/le condenseur (16) de la centrale électrique (12) au moyen du système de canalisations pour la distribution (24) afin de chauffer l'eau, et l'eau chauffée est guidée au moyen du système de canalisations pour la distribution (24) via l'échangeur de distribution de chaleur (14, 10.1, 10.2) de chaque consommateur de chaleur (18) afin de fournir de la chaleur au consommateur de chaleur (18), et l'eau est renvoyée depuis l'échangeur de distribution de chaleur (14, 10.1, 10.2) dans la conduite de retour dédiée (22) vers la conduite de retour (30) du système de canalisations pour la distribution (24), la conduite de retour (30) ramenant l'eau dans la chaudière/le condenseur (16) de la centrale électrique (12), **caractérisé en ce que** plusieurs desdits consommateurs de chaleur (18) ont un objet (52) et ont une pompe à chaleur (32), la pompe à chaleur (32) étant adaptée pour refroidir la température de l'eau de la conduite de retour dédiée (22) de façon à ce que le débit du système de canalisations pour la distribution (24) soit réduit, tandis que la pompe à chaleur (32) est simultanément adaptée pour fournir de la chaleur audit objet (52) sélectionné par les consommateurs de chaleur (18).

2. Système de chauffage urbain conformément à la revendication 1, **caractérisé en ce que** la centrale électrique est une centrale électrique à contre-pression (12) qui comprend une turbine (14) et un condenseur (16) pour chauffer l'eau de chauffage urbain de sorte que, en raison de la baisse de température de l'eau de retour, le débit est réduit, la pression dans le condenseur (16) baisse et la production de puissance par kilogramme de vapeur augmente.

3. Système de chauffage urbain conformément à la revendication 1, **caractérisé en ce que** la centrale électrique est une chaudière pour chauffer l'eau de chauffage urbain de sorte que, en raison de la baisse de température de l'eau de retour, le débit est réduit.

4. Système de chauffage urbain conformément à la revendication 1 ou 3, **caractérisé en ce que** la chaudière comprend un épurateur de gaz résiduaires, dans lequel l'eau de retour permet au moins partiellement de refroidir les gaz de combustion et de condenser leur teneur en vapeur d'eau.

5. Système de chauffage urbain conformément à l'une quelconque des revendications 1 à 4, **caractérisé en ce que** chaque consommateur de chaleur (18) dispose d'un système de canalisations de chauffage (44) auquel le condenseur (42) de la pompe à chaleur (32) est relié afin de fournir la chaleur.

6. Système de chauffage urbain conformément à la revendication 5, **caractérisé en ce que** ladite pompe à chaleur (32) est adaptée pour transporter de la chaleur en parallèle d'un échangeur de distribution de chaleur (20) vers ledit système de canalisations de chauffage (44).

7. Système de chauffage urbain conformément à l'une quelconque des revendications 1 à 6, **caractérisé en ce que** la conduite de retour dédiée (22) est reliée à l'échangeur de distribution de chaleur (20) du consommateur de chaleur (18) et à la conduite de retour (30) du système de canalisations de distribution (24).

8. Système de chauffage urbain conformément à l'une quelconque des revendications 1 à 7, **caractérisé en ce que** la pompe à chaleur (32) est prévue pour pouvoir faire baisser la température de l'eau de la conduite de retour dédiée (22) de 5 °C à 30 °C, de préférence de 20 °C à 30 °C.

9. Système de chauffage urbain conformément à la revendication 5, **caractérisé en ce que** la pompe à chaleur (32) comprend une circulation de fluide en circuit fermé (34), un compresseur (36), un détendeur (38), un évaporateur (40) et un deuxième condenseur (42), et la pompe à chaleur (32) est reliée de façon à utiliser au moyen de son évaporateur (40) la chaleur de l'eau de chauffage urbain de la conduite de retour dédiée (22) pour faire baisser la température de l'eau de la conduite de retour (30) du système de canalisations de distribution (24) ainsi que pour fournir la chaleur au fluide du système de canalisations de chauffage (44) du consommateur de chaleur (18).

10. Système de chauffage urbain conformément à l'une quelconque des revendications 1 à 9, **caractérisé en ce que** la sortie nominale de la pompe à chaleur (32) est comprise entre 10 % et 50 %, de préférence entre 20 % et 30 %, de la sortie nominale du chauffage urbain au niveau du consommateur de chaleur.

11. Système de chauffage urbain conformément à l'une quelconque des revendications 1 à 10, **caractérisé en ce qu'**il comprend un fournisseur de chauffage urbain, et **en ce que** la pompe à chaleur (32) est reliée à un système de commande du fournisseur de chauffage urbain en tant que ressource contrôlable à distance.

12. Système de chauffage urbain conformément à l'une quelconque des revendications 1 à 11, **caractérisé en ce que** l'objet (52) de la chaleur fournie par la pompe à chaleur (32) est un circuit de chauffage d'un complexe immobilier en parallèle d'un échangeur de chaleur (14) chauffé traditionnellement par le chauffage urbain.

13. Système de chauffage urbain conformément à l'une quelconque des revendications 1 à 12, **caractérisé en ce qu'**il comprend un système de récupération de la chaleur de l'air d'évacuation (20), et **en ce qu'**un échangeur de chaleur (50) de la conduite de retour dédiée (22) est relié en parallèle au système de récupération de la chaleur de l'air d'évacuation (20).

14. Méthode dans le but d'augmenter la puissance pour le consommateur de chaleur (18) dans le système de chauffage urbain (10) de la revendication 1,
dans lequel l'eau circule dans la chaudière/le condenseur (16) de la centrale électrique (12) au moyen du système de canalisations pour la distribution (24) afin de chauffer de l'eau, et l'eau chauffée est guidée au moyen du système de canalisations pour la distribution (24) via l'échangeur de distribution de chaleur (14, 10.1, 10.2) de chaque consommateur de chaleur (18) afin de fournir de la chaleur au consommateur de chaleur (18), et l'eau est renvoyée depuis l'échangeur de distribution de chaleur (14, 10.1, 10.2) dans la conduite de retour dédiée (22) vers la conduite de retour (30) du système de canalisations pour la distribution (24), la conduite de retour (30) ramenant l'eau dans la chaudière/le condenseur (16) de la centrale électrique (12), **caractérisée en ce que** la température de l'eau de la conduite de retour dédiée (22) est refroidie au moyen de la pompe à chaleur (32) tandis que la puissance utilisée reste la même, et la quantité de chaleur obtenue est utilisée à une température augmentée dans un objet de chauffage sélectionné par le consommateur de chaleur (18) en parallèle avec un chauffage traditionnel.

15. Méthode conformément à la revendication 14, **caractérisée en ce que** le débit du système de canalisations pour la distribution (24) est réduit afin de créer une capacité régionale supplémentaire et/ou afin de réduire les pertes de débit.
